# EUROPEAN PATENT APPLICATION

(11) **EP 1 621 114 A1**
(43) Date of publication of application: **01.02.2006**
(21) Application number: 05425517.9
(22) Date of filing: 19.07.2005
(51) Int. Cl.: A47J 37/07, A47J 37/06

(54) **Non-smoke charcoal horizontal-vertical barbecue**

(30) Priority: 27.07.2004 IT TE20040004 U
(71) Applicant: Sammassimo, Andrea, 64013 Corropoli TE (IT)
(72) Inventor: Sammassimo, Andrea, 64013 Corropoli TE (IT)

(57) **Abstract**

The non-smoke coal horizontal-vertical barbecue is used for cooking courses, such as: meat, fish and vegetables. It can be used as a normal barbecue, disposing the food on the grill in a horizontal position (G), or due to an easier and safer method, the cooking area can be inclined and arranged in a vertical position (E).
The above-mentioned cul-de-sac cooking area is composed by a radiator which will contain the coal. The two faces of this radiator area characterized by a very thick grill which does not allow the flowing out of fuel. Furthermore, the other sides, accommodate some bars (which permit the flowing and change its position) or some holes (to add supports able to hold grills or insert hooks to facilitate the inclination of the radiator).
The cooking area is settled inside a steel or iron tank (A) where two particular joints are put, and accommodate the bars of the radiator to allow a sure and a easy change of inclination.

Using the barbecue in a vertical position (E), it is possible to have more tasty courses compared to other cooking methodologies because roasted without noxious smoke. Besides, it adapts to cook at the same time bigger quantities of food allowing to save fuel and time. No risk for having accidental falling of the food from the grill, because it has been studied on purpose to remain in a vertical position thanks to undulations of the inside parts by which it is built with. The sinuous course of the fillets which build the grill hold the food straight and fixed.

## Description

This patent regards a non-electrical cooking instrument. Reasonably, the technical sector where the invention is well settled is the metallurgical and mechanical sector and hardware sector.

The pre-existent technical situation, or better the function of the traditional ¹ barbecue provides to cook different courses on a horizontal area, where solid fuel (coal, firewood, etc...) is used. With the following method it's possible to cook a quantity of courses proportional to the cooking area.

Furthermore, the burning area, which is in a horizontal position, collects the material lipoidica that through the heat flows by the cooked food. The hot embers ² make up thick and grey smoke holding carbon monoxides and organic whole with high carcinoma proprieties. A big amount of these composites will not be air-scattered but will be absorbed by the cooking course.

The non-smoke coal horizontal-vertical barbecue that wants to be patented is able to supply a kind of traditional cooking (horizontal) as well as a vertical kind of ³ cooking. The former method is a newly one to cook food and it is healthy and dietetic, because it is a barbecue which does not produce smoke. All this due to a kind of system that let's the fat of the food not get in contact with the burning coal, so the liquids produced will flow in the proper tank. Avoiding to produce smoke and flames, caused by the development of benzopyrene which has a strong ⁴ carcinogenic power.

The barbecue is composed by a tank, which has a parallelepiped shape and can be built both in iron plate or in steel plate **- *check picture 1(A)- ,*** supported by n° 4 holding elements **(** *- **check picture 1(B)-:*** supports that allow to set it on the floor) located in the corner of the tank and strengthened by the reinforcement. The two ⁵ fore supports are supplied, on the other extremity, with wheels that move the barbecue easily - ***check picture 1 (C)-.***

Inside the tank, on two long parallel sides, there have been applied two special flowing joints (one for each side) ***(check picture* 2)** which permits the inclination of the cooking area. Therefore, on this, supporting part, the cooking area flows ⁶ easily, or a heating radiator, where the coal is settled, is made red-hot by the ignition-liquids. The following structure has the shape of a parallelepiped and is set inside the tank and has a smaller size than the former.

Inside the radiator the coal ignition is very fast and facilitated because it is completely opened on 3 of its 6 sides by which it is built **- *check picture 3-:*** one ⁷ side allows to introduce the fuel; the upper and the inferior side (which correspond to the cooking area) are composed by a grill; at last, the other lateral parts are lacked of openings not allowing the fuel (ex.: coal) to flow away; even more these sides are provided by pivots which are set in the flowing joints.

On the loom, on the side where the fuel is settled, there have been made some ⁸ perforations: two of them (parallel to each other and set on the right and on the left of the radiator) permit the introduction of a hook **- *check picture 5-*** with a wood handle used to lift and to skid the radiator in a vertical-horizontal position and vice versa - ***check picture 7(E,F,G)* -.** The others (four) are used for the introduction of bars (circular structural shape) in steel - ***check picture 3(D)-*** where ⁹ the grills will be hung during the vertical cooking position.

The above-mentioned grills can be introduced by the front with the proper supporting fins (they are two and assembled by joint on the right and on the left of the radiator and they have to hold the *grill) - **check picture 4-,*** and of course by the back using the steel bars. For this it is possible to use two sides to cook. It is also ¹⁰ possible to bring them nearer to the heating source (it brings coal to the radiator) or leave them at a certain distance, all depending on the wished cooking level.

The grills, which have been studied for this kind of barbecue, do not allow the falling of the food from the grill while they are brought in a vertical position. All this is possible due to the undulations that are settled on the inside sides of the grill ¹¹ that compress and hold well attached the food - ***check picture 6-*.**

The barbecue is supplied by a 'fat collecting' drawer - ***check picture 8-*** easy to pull out, to facilitate the cleaning. It is set at the end of the tank, under the radiator.

The steadiness of the cooking area, set in a vertical position, is insured by the particular structure of the binary or flowing guides, the ones that do not allow ¹² accidental falling.

The characteristic cul-de-sac shape of the holding coal cooking area, its reduced sizes and the thick grill, does not permit that the fuel flows away incidentally.

The courses are cooked by direct irradiation. During the use of the barbecue if one chooses the vertical position, the cooking area will be flown (helping oneself with ¹³ the handles supplied by hooks) to be put in the correct position through the guides, the radiator is filled by coal and when the fuel will be made completely red-hot, the circular holding grill has to be inserted (if the two cooking sides want to be both used), otherwise it is just important to insert one grill in the proper fins that will always be settled **- *check picture 9-.***

¹⁴ On the contrary, if one wants to use it in a horizontal position, the only thing to do is to act as one does with a traditional barbecue **-** ***check picture 10-**.*

The horizontal-vertical barbecue is able to realise, with the same equipment, without adding or eliminating mechanical artifices to the barbecue, a classical cooking in a horizontal position compared to a vertical position just through a slit ¹⁵ inclination of the cooking area. All this realises the cooking of healthier food without modifying the taste because the fat, which usually burns and modifies the taste of the food, flows and provokes neither flames nor smoke. Furthermore, using the vertical method of cooking, it is possible to cook bigger quantities of food using the same amount of fuel, just as a normal barbecue although because it ¹⁶ is possible to insert two grills at the same moment (in the front and in the back), so that the two cooking sides are well used.

Finally, what wants to be patented is the invention of a barbecue with solid fuel, able to realise at the same moment, a cooking on an horizontal board and one on a vertical board through a cul-de-sac cooking area only through a slit inclination of ¹⁷the cooking area.

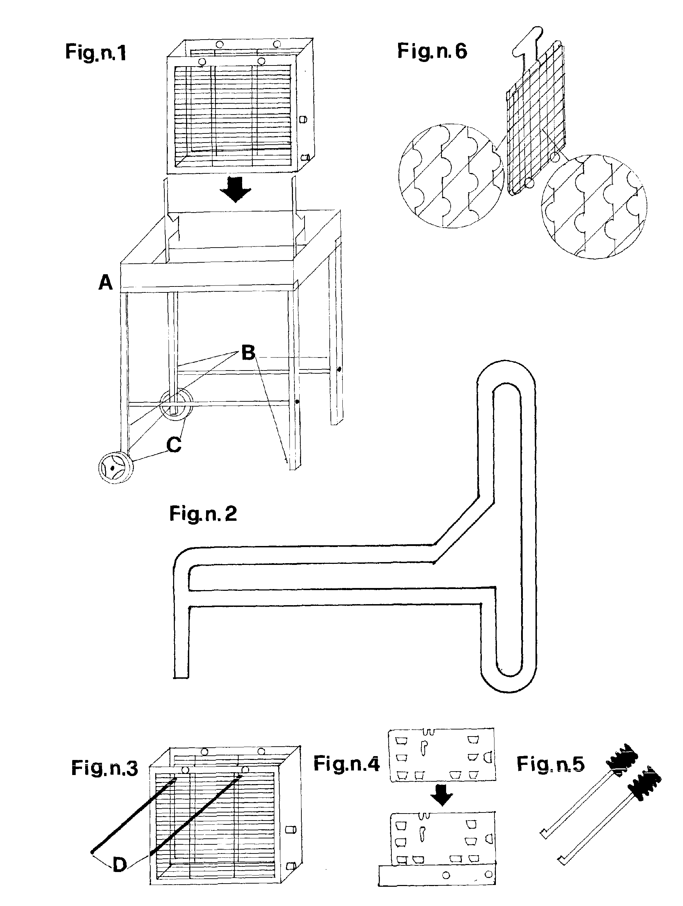

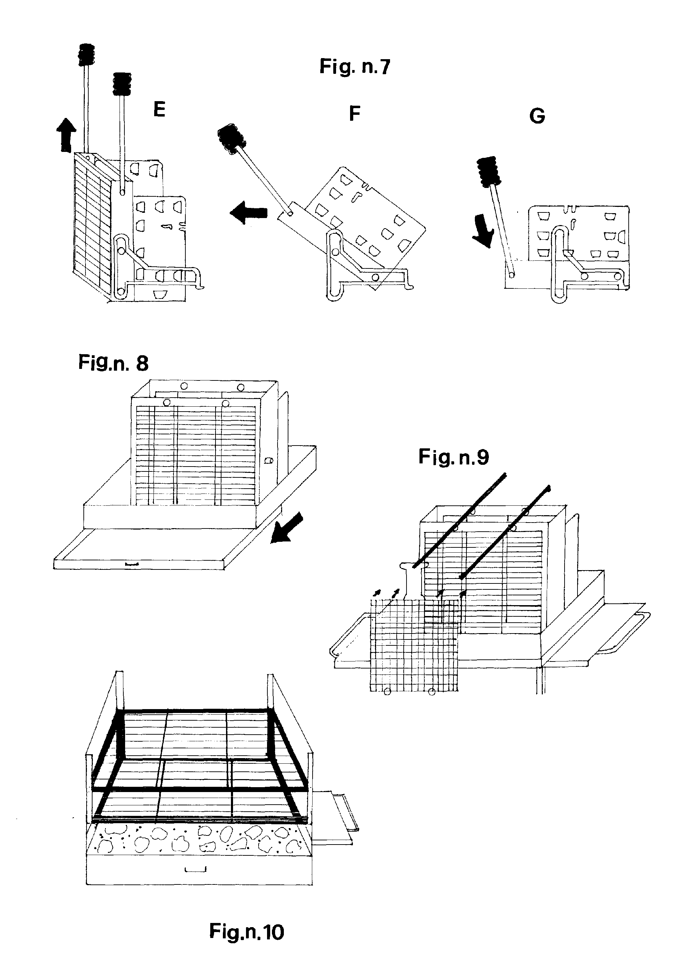

## Claims

1. The current barbecues have a fixed cooking area, in a horizontal or vertical position. The non-smoke coal horizontal-vertical barbecue is **characterized by** a bended cul-de-sac cooking area which works as a coal holding radiator. ***Check picture 7(E,F,G).***

2. The barbecue is **characterized by** two contrasting steel flowing binaries, with a "T" shape. They permit the movement of the bars fixed on the loom of the cooking area, allowing it to slide from vertical to horizontal and vice versa. ***Check picture 2 and picture 7(E,F,G).***

3. The radiator, declared in the claim 1, is **characterized by** two supporting fms for the grill, utilizable even when the barbecue is used in a vertical position. ***Check picture 4 and picture 7(E,F,G).***

4. The grill is **characterized by** a sinuous reticulate which compresses the food from the inside and does not permit the falling, if it is hold in a vertical position. ***Check picture 6.***
